# EUROPÄISCHE PATENTSCHRIFT

(11) **EP 2 350 573 B1**
(45) Veröffentlichungstag und Bekanntmachung des Hinweises auf die Patenterteilung: **15.07.2015**
(21) Anmeldenummer: 09748058.6
(22) Anmeldetag: 08.10.2009
(51) Int. Cl.: G01D 11/16, G01D 5/347

(54) **SENSOREINRICHTUNG ZUM ERFASSEN DER DREHLAGE EINER ROTIERENDEN WELLE**
SENSOR DEVICE FOR DETECTING THE ROTATIONAL POSITION OF A ROTATING SHAFT
DISPOSITIF CAPTEUR DESTINÉ À DÉTECTER LA POSITION DE ROTATION D'UN ARBRE EN ROTATION

(30) Priorität: 11.11.2008 DE 102008043639
(43) Veröffentlichungstag der Anmeldung: 03.08.2011
(73) Patentinhaber: Robert Bosch Automotive Steering GmbH, 73527 Schwäbisch Gmünd (DE)
(72) Erfinder: HIRNING, Walter, 73529 Schwäbisch Gmünd (DE)
(86) Internationale Anmeldenummer: PCT/EP2009/063080
(87) Internationale Veröffentlichungsnummer: WO 2010/054901

(56) Entgegenhaltungen:
- EP-A2- 0 986 159
- DE-U1-202007 011 837
- JP-A- 2000 105 131
- US-A1- 2002 175 251

## Beschreibung

Die Erfindung bezieht sich auf eine Sensoreinrichtung zur Erfassung der Drehlage einer rotierenden Welle nach dem Oberbegriff des Anspruches 1.

In der DE 10 2005 059 162 A1 wird die Erfassung der Drehlage einer Rotorwelle in einem Elektromotor mithilfe einer Sensoreinrichtung beschrieben. Die Sensoreinrichtung umfasst einen Gebermagneten, der drehfest mit der Rotorwelle verbunden ist, sowie einen Sensor, der bei der Rotation der Rotorwelle Änderungen im Magnetfeld, das von dem Gebermagneten ausgeht, erfasst. Der Gebermagnet ist als Magnetring ausgebildet, der in eine Riemenscheibe eingespritzt ist, welche an der Stirnseite der Rotorwelle angeordnet und mit dieser drehfest verbunden ist. Der Sensor ist gehäusefest angeordnet.

Die Riemenscheibe als Träger des Gebermagneten muss fest mit der Rotorwelle verbunden werden. Hierbei ist in der Regel auf eine klein bauende und leicht zu montierende Ausführung zu achten.

Der Erfindung liegt die Aufgabe zu Grunde, mit einfachen konstruktiven Maßnahmen eine Sensoreinrichtung zum Erfassen der Drehlage eines rotierenden Bauteils klein bauend und in einfach zu montierender Weise auszuführen, wobei zugleich eine feste Verbindung zwischen einem Gebermagneten der Sensoreinrichtung und der Welle gegeben sein soll.

Diese Aufgabe wird erfindungsgemäß mit den Merkmalen des Anspruches 1 gelöst. Die Unteransprüche geben zweckmäßige Weiterbildungen an.

Die erfindungsgemäße Sensoreinrichtung wird beispielsweise zum Erfassen der Drehlage einer Lenkwelle in einem Lenksystem eines Fahrzeugs eingesetzt. Gemäß einer weiteren Ausführung dient die Sensoreinrichtung zur Detektierung der Drehlage einer Rotorwelle in einem Elektromotor, beispielsweise in einem elektrischen Servomotor in einem Lenksystem eines Fahrzeugs.

Die Sensoreinrichtung umfasst einen Gebermagneten sowie einen Sensor, wobei der Gebermagnet erfindungsgemäß auf einem als Trägerstift ausgeführten Trägerteil aufgenommen und der Trägerstift in eine Ausnehmung in der Stirnseite der Welle eingesetzt ist. Diese Ausführung zeichnet sich durch konstruktive Einfachheit aus, wobei insbesondere sowohl zwischen dem Trägerstift und dem Gebermagneten als auch zwischen dem Trägerstift und der Welle eine feste Verbindung gegeben ist, so dass der Gebermagnet über den Trägerstift drehfest mit der Welle verbunden ist und auch in Achsrichtung eine bezogen auf die Welle feste Position einnimmt. Der Trägerstift als Trägerteil lässt sich in einfacher Weise mit dem Gebermagneten verbinden, beispielsweise derart, dass der Gebermagnet ringförmig ausgeführt ist und der Trägerstift in eine zentrale Ausnehmung im ringförmigen Gebermagneten einragt. Hierbei kommen sowohl Ausführungen in Betracht, bei denen der ringförmige Gebermagnet als separates, vorgefertigtes Bauteil auf den Trägerstift aufgesetzt und mit diesem verbunden wird, als auch Ausführungen, bei denen der Gebermagnet als Spritzgussbauteil gefertigt ist und im Spritzgussverfahren an den Trägerstift angespritzt wird.

Des Weiteren ist es möglich, anstelle einer Ringform sonstige Geometrien für den Gebermagneten vorzusehen, beispielsweise Scheibenform ohne zentrale Ausnehmung, wobei in diesem Fall der Gebermagnet über geeignete Befestigungsmaßnahmen mit dem Trägerstift zu verbinden ist, beispielsweise durch Befestigungsmittel wie Klammern, Schrauben oder durch Verkleben bzw. sonstige Maßnahmen.

Auf Grund der Aufnahme des Trägerstiftes in der Ausnehmung in der Stirnseite der Welle besteht eine verhältnismäßig große Kontaktfläche zwischen Innenwand der Ausnehmung und Außenmantel des Trägerstiftes, über die Momente in Umfangsrichtung und Kräfte in Achsrichtung übertragbar sind. Die Verbindung erfolgt vorzugsweise durch Einpressen des Trägerstiftes in die Ausnehmung, wobei auf Grund der großen Kontaktfläche ein verhältnismäßig geringes Übermaß im Durchmesser des Trägerstiftes bezogen auf den Durchmesser der Ausnehmung zum Herstellen einer ausreichend festen Verbindung genügt. Auf Grund der verhältnismäßig hohen Einpresskräfte besteht in dieser Ausführung der Trägerstift vorzugsweise aus einem Material hoher Festigkeit.

Grundsätzlich möglich ist es aber auch, definierte Einkerbungen in den Innenmantel der Ausnehmung und/oder den Außenmantel des Trägerstiftes einzubringen, wodurch geringere Einpresskräfte auf Grund der linienförmigen Berührung zwischen Trägerstift und Ausnehmung und einer plastischen Verformung im Bereich der Kontaktfläche ausreichen. Befinden sich die Einkerbungen beispielhaft am Innenmantel der Ausnehmung, so kann ein Trägerstift aus weicherem Material wie z.B. Messing mit Zylinderform verwendet werden, dessen Außenmantel sich beim Einpressen in die Einkerbungen am Innenmantel der Ausnehmungen einschneidet. Hierdurch wird ein Drehmomentformschluss erzielt. Während des Pressvorgangs auftretenden Verformungen im Bereich des Außenmantels des Trägerstiftes können Hohlräume zwischen Trägerstift und Innenmantel der Ausnehmung ausfüllen und hierdurch den Formschluss noch verbessern. Gegebenenfalls kann auch ein Stift aus härterem Material verwendet werden, der in die Ausnehmung mit Einkerbungen am Innenmantel eingepresst wird.

In Betracht kommen außerdem sonstige Verbindungsmaßnahmen zwischen Trägerstift und der Ausnehmung, beispielsweise Verkleben oder mechanische Verbindungsmittel.

Die Verbindung zwischen dem Gebermagneten und dem Trägerstift ist zweckmäßigerweise formschlüssig, wobei der Formschluss vorzugsweise zumindest in Achsrichtung besteht. Der Formschluss wird beispielsweise durch radiale Vertiefungen und in die Vertiefungen einragende radiale Erhebungen zwischen Gebermagnet und Außenmantel des Trägerstifts gebildet. Die Vertiefungen befinden sich beispielhaft am Außenmantel des Trägerstifts, die Erhebungen dementsprechend an der Innenseite der zentralen Ausnehmung im ringförmigen Gebermagneten. Grundsätzlich kommt aber auch eine umgekehrte Ausführung in Betracht, also eine radiale Erhebung am Außenmantel des Trägerstifts und eine entsprechende, radiale Vertiefung an der Innenseite der zentralen Ausnehmung im Gebermagneten.

Um auch eine hinreichende Drehmomentkopplung zwischen ringförmigem Gebermagneten und Trägerstift zu erreichen, ist der Gebermagnet vorteilhafterweise mit Reibschluss mit dem Trägerstift verbunden. Der Reibschluss wird insbesondere durch ein Aufrauen der unmittelbar aneinanderliegenden Kontaktflächen zwischen Trägerstift und Gebermagnet gebildet, beispielsweise durch eine gerändelte Oberfläche am Außenmantel des Trägerstifts, wodurch die Reibung zwischen Gebermagnet und Trägerstift erheblich erhöht wird. Bei einer Kombination mit dem Formschluss in Achsrichtung befindet sich die gerändelte Oberfläche vorzugsweise in einer radialen Vertiefung an der Mantelfläche des Trägerstiftes.

Im montierten Zustand befindet sich zweckmäßigerweise der Gebermagnet mit axialem Abstand zur Stirnseite der Welle, deren Drehlage detektiert werden soll. Der hierbei bestehende Luftspalt zwischen dem Gebermagneten und der Stirnseite der Welle hat eine magnetisch isolierende Funktion, so dass das vom Gebermagnet ausgehende Magnetfeld nicht oder nur in geringer Weise durch die Welle beeinflusst wird. Grundsätzlich möglich ist aber auch ein unmittelbares Anliegen des Gebermagneten an der Stirnseite der Welle, insbesondere in Kombination mit einer magnetischen Isolierung, beispielsweise über einen magnetisch nicht leitfähigen Ring, der zwischen Stirnseite der Welle und Gebermagnet liegt.

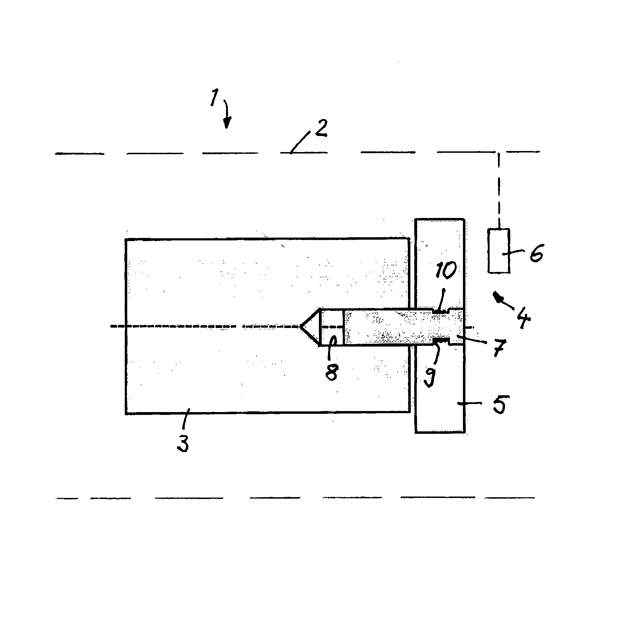

Weitere Vorteile und zweckmäßige Ausführungen sind den weiteren Ansprüchen, der Figurenbeschreibung und der Zeichnung zu entnehmen, die in schematischer Weise eine Sensoranordnung an einer Rotorwelle eines Elektromotors darstellt.

Bei dem dargestellten Elektromotor 1 handelt es sich beispielsweise um einen elektrischen Servomotor zur Servounterstützung in einem Lenksystem eines Kraftfahrzeugs. Der Elektromotor 1 weist in einem Gehäuse 2 einen gehäusefesten Stator sowie eine rotierend gelagerte Rotorwelle 3 auf, deren Drehlage mithilfe einer Sensoreinrichtung 4 detektiert wird. Die Sensoreinrichtung 4 umfasst einen Gebermagneten 5, der drehfest mit der Rotorwelle 3 verbunden ist, sowie einen gehäusefest angeordneten Sensor 6, der Magnetfeldänderungen zu detektieren in der Lage ist, welche beim Umlaufen der Rotorwelle 3 sowie des Gebermagneten 5 entstehen. Die entsprechenden Sensorsignale des Sensors 6 werden in einer Regel- bzw. Steuereinheit ausgewertet und können zur Einstellung des Elektromotors 1 herangezogen werden.

Bei dem Sensor 6 handelt es sich beispielsweise um einen AMR-Sensor (anisotroper magnetoresistiver Effekt) oder um einen Hall-Sensor.

Der Gebermagnet ist an einem Trägerstift 7 befestigt, der in eine Ausnehmung 8 eingesetzt ist, welche in die Stirnseite der Welle 3 eingebracht ist. Um in Achsrichtung eine formschlüssige Verbindung zwischen dem Gebermagneten 5 und dem Trägerstift 7 zu erreichen, ist in die Mantelfläche des Trägerstiftes 7 eine ringförmige Vertiefung 9 eingebracht, die mit einer Rändelung 10 versehen ist. Die Rändelung 10 hat die Aufgabe, einen Reibschluss in Umfangs- bzw. Drehrichtung zwischen Gebermagneten 5 und Trägerstift 7 herzustellen. Der Gebermagnet 5 liegt in der Vertiefung 9 am Trägerstift 7 mit Kontakt zur Rändelung 10 an.

Vorteilhafterweise handelt es sich bei dem Gebermagneten 5 um ein Spritzgussbauteil, welches im Spritzgussverfahren an den Trägerstift 7 angespritzt wird.

Für eine feste Verbindung sowohl in Achsrichtung als auch in Drehrichtung zwischen Trägerstift 7 und Welle 3 ist der Trägerstift 7 in die Ausnehmung 8 eingepresst. Gemäß einer ersten vorteilhaften Ausführung besteht der Trägerstift 7 aus einem festen Material, welches in der Lage ist, die verhältnismäßig hohen axialen Einpresskräfte aufzunehmen. Gemäß einer zweiten vorteilhaften Ausführung weist der Innenmantel der Ausnehmung 8 Einkerbungen auf, die beispielsweise mithilfe eines gekerbten Stempelwerkzeuges eingebracht werden, was den Vorteil hat, dass ein Trägerstift aus weicherem Material wie z.B. Messing verwendet werden kann, dessen Mantelfläche sich beim Einpressen in die Ausnehmung 8 geringförmig verformt, so dass zwischen den Einkerbungen und der Mantelfläche des Trägerrings ein Formschluss entsteht, der insbesondere in Drehrichtung, aber auch in Achsrichtung wirksam ist und dadurch den Trägerstift 7 sicher mit der Welle 3 verbindet.

Im gezeigten Ausführungsbeispiel liegt der Gebermagnet 5 in der montierten Position auf Abstand zur Stirnseite der Welle 3, so dass zwischen der Stirnseite der Welle 3 und der zugewandten axialen Stirnfläche des Gebermagneten ein Luftspalt liegt, welcher eine magnetisch isolierende Funktion hat.

### Bezugszeichenliste

- 1: Elektromotor
- 2: Gehäuse
- 3: Rotorwelle
- 4: Sensoreinrichtung
- 5: Gebermagnet
- 6: Sensor
- 7: Trägerstift
- 8: Ausnehmung
- 9: Vertiefung
- 10: Rändelung

## Patentansprüche

1. Sensoreinrichtung zum Erfassen der Drehlage einer rotierenden Welle, die in einem Gehäuse (2) drehbar gelagert ist, mit einem Gebermagneten (5), der auf einem Trägerteil befestigt ist, das mit der Welle (3) verbunden ist, **dadurch gekennzeichnet, dass** das Trägerteil ein Trägerstift (7) ist, der in einer Ausnehmung (8) in der Stirnseite der Welle (3) aufgenommen ist, der Gebermagnet (5) ringförmig ausgebildet ist und den Trägerstift (7) umschließt, wobei der Gebermagnet (5) als Spritzgussbauteil ausgeführt ist und an den Trägerstift (7) angespritzt ist.

2. Sensoreinrichtung nach Anspruch 1, wobei der Gebermagnet (5) mit axialem Abstand zur Stirnseite der Welle (3) angeordnet ist.

3. Sensoreinrichtung nach einem der Ansprüche 1 oder 2, wobei der Gebermagnet (5) formschlüssig auf dem Trägerstift (7) aufsitzt.

4. Sensoreinrichtung nach Anspruch 3, wobei der Formschluss durch radiale Vertiefungen (9) und in die Vertiefungen (9) einragende radiale Erhebungen zwischen dem Gebermagneten (5) und dem Außenmantel des Trägerstifts (7) gebildet ist.

5. Sensoreinrichtung nach einem der Ansprüche 1 bis 4, wobei der Gebermagnet (5) reibschlüssig mit dem Trägerstift (7) verbunden ist.

6. Sensoreinrichtung nach Anspruch 5, wobei der Reibschluss durch Aufrauen der unmittelbar aneinanderliegenden Kontaktflächen zwischen Trägerstift (7) und Gebermagnet (5) gebildet ist.

7. Sensoreinrichtung nach einem der Ansprüche 1 bis 6, wobei der Trägerstift (7) in die Ausnehmung (8) in der Stirnseite der Welle (3) eingepresst ist.

8. Sensoreinrichtung nach einem der Ansprüche 1 bis 7, wobei mindestens eine Kontaktfläche zwischen der Ausnehmung (8) und dem Trägerstift (7) mit einer Einkerbung versehen ist.

9. Lenksystem mit einer Sensoreinrichtung nach einem der Ansprüche 1 bis 8, wobei die den Gebermagneten (5) aufweisende Welle eine Lenkwelle des Lenksystems ist.

10. Elektromotor mit einer Sensoreinrichtung nach einem der Ansprüche 1 bis 8, wobei die den Gebermagneten (5) aufweisende Welle die Rotorwelle (3) des Elektromotors (1) ist.

## Claims

1. Sensor device for detecting the rotary position of a rotating shaft which is rotatably mounted in a housing (2), comprising a transmitter magnet (5) which is fixed on a support part which is connected to the shaft (3), **characterized in that** the support part is a support pin (7) which is held in a recess (8) in the end face of the shaft (3), and the transmitter magnet (5) is of annular design and surrounds the support pin (7), wherein the transmitter magnet (5) is designed as an injection-moulded component and is moulded onto the support pin (7).

2. Sensor device according to Claim 1, wherein the transmitter magnet (5) is arranged at an axial distance from the end face of the shaft (3).

3. Sensor device according to either of Claims 1 and 2, wherein the transmitter magnet (5) sits on the support pin (7) in an interlocking manner.

4. Sensor device according to Claim 3, wherein the interlocking connection is formed by radial depressions (9) and radial raised portions, which project into the depressions (9), between the transmitter magnet (5) and the outer casing of the support pin (7).

5. Sensor device according to one of Claims 1 to 4, wherein the transmitter magnet (5) is connected to the support pin (7) with a friction fit.

6. Sensor device according to Claim 5, wherein the friction-fitting connection is formed by roughening the contact areas, which lie directly against one another, between support pin (7) and transmitter magnet (5).

7. Sensor device according to one of Claims 1 to 6, wherein the support pin (7) is pressed into the recess (8) in the end face of the shaft (3).

8. Sensor device according to one of Claims 1 to 7, wherein at least one contact area between the recess (8) and the support pin (7) is provided with a notch.

9. Steering system comprising a sensor device according to one of Claims 1 to 8, wherein the shaft which has the transmitter magnet (5) is a steering shaft of the steering system.

10. Electric motor comprising a sensor device according to one of Claims 1 to 8, wherein the shaft which has the transmitter magnet (5) is the rotor shaft (3) of the electric motor (1).

## Revendications

1. Dispositif capteur destiné à détecter la position de rotation d'un arbre en rotation disposé de façon à pouvoir tourner dans un carter (2), avec un aimant de transmetteur (5) fixé sur une partie de support reliée à l'arbre (3), **caractérisé en ce que** la partie de support est une tige de support (7) logée dans un évidement (8) prévu dans le côté avant de l'arbre (3), l'aimant de transmetteur (5) prenant une forme d'anneau et ceignant la tige de support (7), l'aimant de transmetteur (5) prenant la forme d'un composant moulé par injection et étant injecté au niveau de la tige de support (7).

2. Dispositif capteur selon la revendication 1, l'aimant de transmetteur (5) étant disposé à une certaine distance axiale du côté avant de l'arbre (3).

3. Dispositif capteur selon l'une quelconque des revendications 1 ou 2, l'aimant de transmetteur (5) reposant par complémentarité de formes sur la tige de support (7).

4. Dispositif capteur selon la revendication 3, la complémentarité de formes étant formée au moyen de renfoncements (9) radiaux et de bosses radiales saillant dans les renfoncements (9), entre l'aimant de transmetteur (5) et l'enveloppe extérieure de la tige de support (7).

5. Dispositif capteur selon l'une quelconque des revendications 1 à 4, l'aimant de transmetteur (5) étant relié par complémentarité de frottements à la tige de support (7).

6. Dispositif capteur selon la revendication 5, la complémentarité de frottements étant formée par grattage des surfaces de contact directement connexes, entre la tige de support (7) et l'aimant de transmetteur (5).

7. Dispositif capteur selon l'une quelconque des revendications 1 à 6, la tige de support (7) étant comprimée dans l'évidement (8), dans le côté avant de l'arbre (3).

8. Dispositif capteur selon l'une quelconque des revendications 1 à 7, au moins une surface de contact étant pourvue d'une encoche entre l'évidement (8) et la tige de support (7).

9. Système de direction équipé d'un dispositif capteur selon l'une quelconque des revendications 1 à 8, l'arbre comportant l'aimant de transmetteur étant un arbre de direction du système de direction.

10. Moteur électrique équipé d'un dispositif capteur selon l'une quelconque des revendications 1 à 8, l'arbre comportant l'aimant de transmetteur (5) étant l'arbre de rotor (3) du moteur électrique (1).
